# EUROPÄISCHE PATENTANMELDUNG

(11) **EP 1 990 117 A2**
(43) Veröffentlichungstag der Anmeldung: **12.11.2008**
(21) Anmeldenummer: 08008787.7
(22) Anmeldetag: 09.05.2008
(51) Int. Cl.: B23D 47/02, B27B 7/00

(54) **Sägemaschineneinheit und Sägemaschine**

(30) Priorität: 11.05.2007 DE 102007022166
(71) Anmelder: Schmidt, Fritz, 94234 Viechtach (DE)
(72) Erfinder: Schmidt, Fritz, 94234 Viechtach (DE)
(74) Vertreter: Herzog, Markus

(57) **Zusammenfassung**

Die vorliegende Erfindung betrifft eine Sägemaschineneinheit (10) für eine entlang einer Vorschubbahn in Vorschubrichtung (V) bewegtes Sägegut in aufeinander folgenden solcher Sägemaschineneinheiten verarbeitende Sägemaschine, wobei die Sägemaschineneinheit (10) wenigstens eine Werkzeuganordnung (20'; 20") umfasst, welche derart ausgebildet ist, dass sie an der Werkzeuganordnung (20'; 20") in der Vorschubrichtung (V) vorbei transportiertes Sägegut bearbeitet oder/und das Sägegut in der Vorschubrichtung (V) transportiert, wobei die Werkzeuganordnung (20'; 20''') im Betrieb der Sägemaschine in fester räumlicher Zuordnung zu dem Sägegut ist, und wobei der Werkzeuganordnung (20'; 20") eine Führungsanordnung (32'; 32") zugeordnet ist, über welche die Werkzeuganordnung (20'; 20''') an einem relativ zu einem Untergrund festen Rahmen (30) der Sägemaschine derart gehalten werden kann, dass die Werkzeuganordnung (20'; 20") in einem Nichtbetriebszustand der Sägemaschine relativ zu dem Rahmen (30) längs einer Führungsrichtung linear verstellbar ist, und wobei die Führungsanordnung (32'; 32''') im Wesentlichen oberhalb der Werkzeuganordnung (20'; 20") oder auf gleicher Höhe wie diese angeordnet ist.

## Beschreibung

Die vorliegende Erfindung betrifft eine Sägemaschineneinheit für eine entlang einer Vorschubbahn in Vorschubrichtung bewegtes Sägegut in aufeinander folgenden solcher Sägemaschineneinheiten verarbeitende Sägemaschine.

Die Sägemaschineneinheit umfasst wenigstens eine Werkzeuganordnung, welche derart ausgebildet ist, dass sie an der Werkzeuganordnung in der Vorschubrichtung vorbei transportiertes Sägegut bearbeitet oder/und das Sägegut in der Vorschubrichtung transportiert. Die Werkzeuganordnung befindet sich im Betrieb der Sägemaschine in fester räumlicher Zuordnung zu dem Sägegut ist, wobei der Werkzeuganordnung eine Führungsanordnung zugeordnet ist, über welche die Werkzeuganordnung an einem relativ zu einem Untergrund festen Rahmen der Sägemaschine derart gehalten werden kann, dass die Werkzeuganordnung in einem Nichtbetriebszustand der Sägemaschine relativ zu dem Rahmen längs einer Führungsrichtung verstellbar ist.

Gewöhnlich sind bei Sägemaschinen zur Verarbeitung von Holzstämmen die einzelnen Sägemaschineneinheiten, insbesondere Sägeeinheiten, Fräsaggregate, Hobelaggregate und dergleichen aufeinander folgend angeordnet. Gegebenenfalls kann einer jeweiligen der genannten Sägemaschineneinheiten noch eine als Einzugseinheit ausgebildete Sägemaschineneinheit vorgeschaltet sein oder/und eine als Auszugeinheit ausgebildete Sägemaschineneinheit nachgeschaltet sein, welche durch entsprechende Transportoder/und Positionierungsanordnungen (z.B. Rollen bzw. Rolleneinheiten) für eine korrekte Transportführung des Sägeguts sorgen. Die jeweiligen Sägemaschineneinheiten sind damit in fester Zuordnung zu der jeweils vorangehenden bzw. nachfolgenden Sägemaschineneinheit angeordnet. Die Werkzeuganordnung ist bei einer solchen Sägemaschineneinheit an einer geeigneten Position an einem Maschinengestell angebracht, das, ebenso wie auch die der Sägemaschineneinheit vorangehenden bzw. nachfolgenden Sägemaschineneinheiten, fest auf einem Untergrund steht. Gewöhnlich ist die am Maschinengestell gehaltene Werkzeuganordnung, z.B. eine Sägeanordnung, welche eine Sägewelle mit daran angeordneter Sägeblattanordnung umfasst, relativ zu dem Maschinengestell bewegbar, z.B in der Höhe verstellbar (z.B. um unterschiedliche Höhen für die Sägeachse einzustellen). Die genaue Einstellung und Ausrichtung solcher Sägemaschineneinheiten relativ zu den anderen Sägemaschineneinheiten, so dass sich ein geradliniger und möglichst horizontaler Verlauf der Transportbahn für das Sägegut ergibt, erfordert einen gewissen Aufwand, was den Aufbau einer solchen Sägemaschine erschwert. Außerdem treten im Betrieb durch unvermeidliche Erschütterungen einzelner Sägemaschineneinheiten immer wieder Dejustierungen auf, die dann regelmäßig durch neues Ausrichten der Werkzeuganordnung ausgeglichen werden müssen. Es versteht sich, dass es z.B. bei einer Sägeeinheit als der Sägemaschineneinheit, gerade auf eine genaue Ausrichtung der Werkzeuganordnung zur Transportbahn des Sägeguts ankommt, um hinreichend exakte Schnittflächen zu erzielen.

Vereinfachungen können erzielt werden, wenn die einzelnen Sägemaschineneinheiten bzw. ihre Maschinengestelle nicht selbst auf dem Untergrund gelagert werden, sondern an einem die gesamte Sägemaschine überspannenden Rahmen angebracht werden. Nur dieser Rahmen braucht dann auf dem Untergrund ausgerichtet zu werden, während die Sägemaschineneinheiten an dem Rahmen gehalten sind und dort auch durch Führungsanordnungen geführt sein, können, so dass die entsprechenden Werkzeuganordnung verstellt je nach Bedarf verstellt werden kann.

Bei einzeln verstellbaren Werkzeuganordnungen ergibt sich häufig das Problem, dass aufgrund der im Betrieb unweigerlich auftretenden Verschmutzung deren Justierung stark behindert wird und nur nach gründlicher Reinigung der Lagerung der Werkzeuganordnung eine Verstellung erfolgen kann. Gerade Führungsanordnungen sind hierbei besonders anfällig gegen Verschmutzung.

Aufgabe der Erfindung ist es, eine Sägemaschineneinheit für eine Sägemachine der genannten Art bereitzustellen, die Vorteile im Betrieb bietet, insbesondere weil sie weniger schmutzanfällig und daher wartungsfreundlicher ist.

Diese Aufgabe wird erfindungsgemäß dadurch gelöst, dass bei einer Sägemaschineneinheit der eingangs genannten Art die Führungsanordnung im Wesentlichen oberhalb der Werkzeuganordnung oder auf gleicher Höhe wie diese angeordnet ist. Die Führung der Sägemaschineneinheit erlaubt selbst bei großem Gewicht der Sägemaschineneinheit genaue Verstellmöglichkeiten der Werkzeuganordnung, weil die Verstellrichtungen durch die Führungsbahnen vorgegeben sind. Erfindungsgemäß werden die Führungen, die zur Halterung und Verstellung der Werkzeuganordnung erforderlich sind, im Wesentlichen aus dem unteren Bereich der Sägemaschineneinheit in deren oberen Bereich verlagert. Durch diese im Grunde einfache Maßnahme, die jedoch bislang für Sägemaschineneinheiten, bei denen das in Vorschubrichtung transportierte Sägegut durch Werkzeuge, z.B. Sägeblätter oder Fräsköpfe, bearbeitet wird, deren Lage im Bezug auf das Sägegut (abgesehen von einer Drehung des Werkzeugs um eine Werkzeugachse) sich während des Betriebs nicht ändert, bislang nicht in Betracht gezogen wurde, ist die Gefahr der Verschmutzung der Führungsanordnung, z.B. durch im Betrieb herabfallende Hackschnitzel, Sägespäne und dgl., deutlich verringert. Es steht außerdem im Bodenbereich wesentlich mehr Raum zur Verfügung, der z.B. zum Aufsammeln und Weiterverwerten von Hackschnitzeln und anderen Abfallprodukten ausgenutzt werden kann.

Dies gilt in besonderem Maße für wenigstens zum Teil horizontal verlaufende Führungsanordnungen, welche zumindest in deren horizontal verlaufendem Teil ohne weiteres in einen Bereich verlegt werden können, der oberhalb der Werkzeuganordnung liegt. Jedoch ist es auch bei anderem Verlauf der Führungsrichtung vorteilhaft und durchaus realisierbar, einen möglichst großen Teil der Führungsanordnung oberhalb der Werkzeuganordnung anzuordnen, z.B. indem eine vertikal verlaufende Führungsanordnung ein auf Höhe der Werkzeuganordnung oder sogar höher angeordnetes Schlittenelement aufweist, welches an einer vertikalen Führungsschiene entlang verfahren wird. Auch wenn die Schiene bis in einen Bereich unterhalb der Werkzeuganordnung reicht, ist dennoch die Verschmutzungsgefahr wegen ihres vertikalen Verlaufs gering. Auch eine Solche Führungsanordnung soll daher als im Wesentlichen oberhalb der Werkzeuganordnung angeordnet angesehen werden.

Die Werkzeuganordnung kann beispielsweise über die Führungsanordnung an dem auf einem Untergrund ruhenden Rahmen der Sägemaschine aufgehängt sein, so dass sie keinerlei unmittelbaren Bodenkontakt hat. Die hängende Lagerung ermöglicht insbesondere eine bessere Entkopplung zwischen der Sägemaschineneinheit und anderen Einheiten in Bezug auf von Schwingungen, die von der Sägemaschineneinheit oder anderen Einheiten erzeugt werden. Die Werkzeuganordnung wird insbesondere so angeordnet sein, dass sie zwar in einem Nichtbetriebszustand der Sägemaschine in der Führungsrichtung relativ zur Vorschubbahn des Sägegutes verstellbar ist, etwa um die Werkzeuganordnung auszutauschen oder nach Austausch von Werkzeugen neu einzustellen, dass sie jedoch in einer einmal gewählten Stellung jedoch gegenüber einer Bewegung längs der Führungsrichtung arretierbar ist. Während des Sägebetriebs ist sie daher, abgesehen von einer selbstverständlich immer gegebenen Drehbarkeit der Werkzeuge um entsprechende Werkzeugsachsen, in Bezug zu der Vorschubbahn ortsfest. Jedoch sind die Werkzeugachsen während des Sägebetriebs ortsfest relativ zur Vorschubbahn des Sägegutes.

Häufig verläuft die Werkzeugachse wenigstens in einem Abschnitt, in dem ein Werkzeug zur Bearbeitung oder zum Transport des Sägeguts angeordnet ist, im Wesentlichen horizontal. In diesem Fall ist vorzugsweise die Führungsanordnung im Wesentlichen oberhalb einer die Werkzeugachse enthaltenden horizontalen Ebene oder auf gleicher Höhe wie diese angeordnet.

Die Sägemaschineneinheit kann ein erstes Maschinengestell umfassen, an dem die Werkzeuganordnung gehalten ist, wobei die Lage der Werkzeuganordnung, insbesondere die Lage von einzelnen Werkzeugachsen, relativ zu dem ersten Maschinengestell fest ist, wobei die entsprechenden Werkzeuge jedoch weiterhin um ihre jeweilige Werkzeugachse relativ zu dem Maschinengestell drehbar sind. Falls eine größere Beweglichkeit der Werkzeuganordnung gewünscht ist, kann sie alternativ derart an dem Maschinenegestell gehalten sein, dass sie relativ zu diesem durch eine erste Führungsanordnung längs einer ersten Führungsrichtung verstellbar ist.

Das Maschinengestell kann durch eine zugeordnete zweite Führungsanordnung relativ zu dem Rahmen der Sägemaschine längs einer zweiten Führungsrichtung verstellbar sein. Dies wird insbesondere dann der Fall sein, wenn die Werkzeuganordnung fest an dem Maschinengestell angebracht ist. Es jedoch auch vorteilhaft, bei einer relativ zu dem Maschinengestell z. B. nur in einer Richtung längs einer ersten Führungsanordnung verstellbaren Werkzeuganordnung das Maschinengestell über eine zweite Führungsanordnung längs einer anderen Richtung gegenüber dem Rahmen verstellbar anzubringen. Die Werkzeuganordnung ist so in einer Ebene quer zur Vorschubrichtung, insbesondere orthogonal zur Vorschubrichtung, beliebig verstellbar (z. B. bei horizontal verlaufender Vorschubrbahn in Vertikalrichtung und in Horizontalrichtung quer zur Vorschubbahn).

Die Sägemaschineneinheit kann zusätzlich noch ein zweites Maschinengestell umfassen. Die Anordnung ist dann bevorzugt so gewählt, dass an dem zweiten Maschinengestell das erste Maschinengestell gehalten ist, wobei das zweite Maschinengestell relativ zu dem ersten Maschinengestell durch eine zweite Führungsanordnung längs einer Führungsrichtung verstellbar ist und wobei das zweite Maschinengestell relativ zu dem Rahmen der Sägemaschine durch eine dritte Führungsanordnung längs einer anderen Führungsrichtung verstellbar ist. Auch dann kann die bereits angesprochene beliebige Verstellbarkeit der Werkzeuganordnung in einer Ebene quer zur Vorschubrichtung, insbesondere orthogonal zur Vorschubrichtung selbst bei einer an dem ersten Maschinengestell fest angebrachten Werkzeuganordnung realisiert werden. Falls die Werkzeuganordnung sogar relativ zu dem ersten Maschinengestell verstellbar ist, erhält man auf diese Weise insgesamt drei Verstellrichtungen, ohne dass eine der Führungsanordnungen eine Verstellbarkeit in mehr als einer Richtung gewährleisten müsste. Die Verstellrichtungen sind vorzugsweise linear.

Um eine sichere und einfach zu bedienende Führung zu gewährleisten, ist vorzugsweise die Führungsanordnung als Linearführungsanordnung ausgebildet. An der Werkzeuganordnung bzw. am Maschinengestell oder dem Rahmen ist dann z.B. ein Schienensystem angebracht, das mit einer entsprechenden Schlittenanordnung, die an dem daran verstellbar gehaltenen Element angebracht ist, zusammenwirkt. Das Schienensystem kann je nach gewünschter Anzahl von Verstellrichtungen eine oder mehrere geradlinig verlaufende Schienen umfassen, die in einem Winkel von vorzugsweise 90° zueinander stehen. Das Linearführungssystem kann im einfachsten Fall eine Gleitführung sein. Gerade wenn das gelagerte Element, z.B. im Falle einer Sägeeinheit mit der bzw. den daran angebrachten Sägeanordnung(en), sehr schwer ist, wird es sich jedoch empfehlen, entsprechend aufwändigere Linearführungssysteme einzusetzen, bei denen der Schlitten durch Wälzkörper gelagert ist.

Ein der Werkzeuganordnung zugeordneter Antriebsmotor kann in einfacher und platzsparender Weise auf der Oberseite des Rahmens oder des Maschinengestells angebracht sein.

Die Sägemaschineneinheit kann eine mit der Werkzeuganordnung oder/und dem Maschinengestell zum Verstellen längs der Führungsrichtung zusammenwirkende Stellvorrichtung umfassen. Die Stellvorrichtung wird hierbei günstig als Linearantriebsvorrichtung ausgebildet sein und kann hydraulisch, pneumatisch oder mechanisch betätigbar sein. Beispiele für solche Linearantriebsvorrichtung sind hydraulisch oder pneumatisch betätigbare Zylinder-/Kolbeneinheiten oder Spindel-/Schlittenantriebe.

Die Stellvorrichtung kann in einfacher Weise zwischen dem Maschinengestell und einem Untergrund, auf dem die Sägemaschine steht, angeordnet sein und so zum Heben bzw. Absenken der Werkzeuganordung bzw. des Maschinengestells dienen, aber auch eine Verlagerung der Werkzeuganordnung bzw. des Maschinengestells parallel zum Untergrund erzeugen. Die Stellvorrichtung wird in diesem Fall an der Unterseite der Werkzeuganordnung bzw.des Maschinengestells angreifen. Je nach Gegebenheit kann auch vorgesehen sein, dass die Stellvorrichtung einen Teil oder das gesamte Gewicht der Sägemaschineneinheit trägt. Bevorzugt wird man dies jedoch allenfalls kurzzeitig, nämlich während der Verstellphasen, zulassen und ansonsten die Werkzeuganordnung bzw. das Maschinengestell an dem auf einem Untergrund feststehenden Rahmen aufhängen, der dann das Gewicht der Sägemaschineneinheit trägt.

Die Stellvorrichtung kann auch zwischen der Werkzeuganordnung bzw. dem Maschinengestell und dem Rahmen angeordnet sein und beispielsweise auf der der Oberseite des Maschinengestells oder aber auch seitlich am Maschinengestell angreifen. Es versteht sich, dass auch eine Kombination dieser Möglichkeiten denkbar ist. Eine solche bietet sich bei einer Sägeeinheit als Beispiel der Sägemaschineneinheit insbesondere dann an, wenn eine Verstellbarkeit der Werkzeuganordnung bzw. des Maschinengestells sowohl in Richtung der Sägeachse(n) als auch orthogonal zu der/den Sägeachse(n) gewünscht ist.

Die Werkzeugachse verläuft vorzugsweise quer zur Vorschubrichtung, insbesondere im Wesentlichen orthogonal zur Vorschubrichtung.

Die Werkzeuganordnung kann sowohl in einer Richtung im Wesentlichen orthogonal zur Werkzeugachse verschiebbar geführt sein als auch im Wesentlichen in Richtung der Werkzeugachse verschiebbar geführt sein.

Die Werkzeuganordnung kann nur ein an einer entlang der Werkzeugachse verlaufenden Werkzeugwelle angebrachtes Werkzeug, z.B. Sägeblatt, oder mehrere Werkzeuge, z.B. Sägeblätter, umfassen, die an der Werkzeugwelle als Werkzeuganordnung gemeinsam um die Werkzeugachse drehbar mit Abstand in axialer Richtung zueinander angebracht sind. Die Werkzeugwelle kann beidseitig einer Vorschubbahn des Sägegutes oder nur auf einer Seite gelagert sein.

Die Sägemaschineneinheit kann beispielsweise als Sägeeinheit ausgebildet sein. Eine solche Sägeeinheit umfasst wenigstens eine Sägeanordnung mit wenigstens einem Sägeblatt, das um eine zugeordnete - wenigstens im laufenden Betrieb - ortsfeste Sägeachse drehbar ist und von einer Seite des Sägeguts her in dieses Sägegut eingreift. Die Sägeeinheit kann auch als Doppelsägeeinheit mit zwei Sägeanordnungen ausgebildet sein, wobei jeder Sägeanordnung eine jeweilige Sägeachse zugeordnet ist, wobei die Sägeachsen zueinander parallel und im Abstand voneinander angeordnet sind.

Die Sägeachse der Sägeeinheit verläuft vorzugsweise quer zur Vorschubrichtung. Das Sägeblatt bzw. die Sägeblattanordnung erzeugt dann im Sägegut, relativ zur Vorschubrichtung gesehen, Schnittflächen in Längsrichtung des Sägeguts, und zwar vorzugsweise entweder als horizontale Schnittfläche bei vertikal angeordneter Sägeachse oder als vertikale Schnittfläche bei horizontal angeordneter Sägeachse.

Vorzugsweise ist die Sägeanordnung in einer Richtung im Wesentlichen orthogonal zur Sägeachse verschiebbar geführt. Eine solche Verlagerung der Sägeanordnung ermöglicht bei ein und derselben Sägeanordnung das Einschneiden des Sägeblatts in das Sägegut von zwei gegenüberliegenden Seiten des Sägeguts her. Dadurch kann dieselbe Sägeanordnung sowohl im Gleichlauf, d.h. bei gleichsinniger Drehung des Sägeblatts mit der Vorschubrichtung des Sägeguts, als auch im Gegenlauf, d.h. bei gegensinniger Drehung des Sägeblatts zur der Vorschubrichtung des Sägeguts, arbeiten. Beispielsweise ist bei horizontal verlaufender Sägeachse das Maschinengestell in vertikaler Richtung verlagerbar, was es ermöglicht, einen Einschnitt in das Sägegut zum einen von unten und zum anderen nach Verstellen der Sägenaordnung nach oben von oben anzubringen. Die vertikale Verstellhöhe kann bis zu mehrere Meter betragen, sodass beispielsweise zwischen einer Höhe der Sägeachse zwischen 18 und 100 mm von unten im Gegenlauf gesägt werden kann und ab einer Höhe der Sägeachse von 100 mm von oben im Gleichlauf gesägt werden kann. Auch hierbei erlaubt es die erfindungsgemäß vorgesehene Führung der Sägeanordnung, diese schnell und flexibel zwischen verschiedenen Stellungen zu verfahren, ohne jeweils von Neuem eine Feineinstellung vornehmen zu müssen.

Die Sägeanordnung kann aber alternativ oder zusätzlich zu der genannten Verstellmöglichkeit orthogonal zur Sägeachse im Wesentlichen in Richtung der Sägeachse verschiebbar geführt sein. Sofern die Sägeachse horizontal verläuft, bedeutet dies eine Verstellmöglichkeit der Sägeanordnung in Querrichtung zur Vorschubrichtung. Dann lassen sich Einschnitte in das Sägegut bei vertikal angeordneten Sägeblättern an verschiedenen Breitenpositionen bzw. bei horizontal angeordneten Sägeblättern in verschiedener Höhe anbringen.

Eine besonders günstige und flexible Einsatzmöglichkeit der Sägeeinheit lässt sich erzielen, wenn auf der Sägeachse wenigstens zwei Sägeblattanordnungen angebracht sind, die in axialer Richtung der Sägeachse einen solchen Abstand zueinander aufweisen, dass durch Verlagern der Sägeanordnung in Richtung der Sägeachse abwechselnd eine der Sägeblattanordnungen in eine Sägestellung bringbar ist, in der ihre Sägeblätter in das Sägegut eingreifen können. Unter Sägestellung ist hierbei eine Verlagerung der entsprechenden Sägeblattanordnung bis in den Bereich der Vorschubbahn des Sägeguts zu verstehen. Wenn die Sägeachse quer zur Vorschubrichtung verläuft, ist ein Verstellen in Richtung der Sägeachse gleichbedeutend mit einem Verstellen in Querrichtung zur Vorschubrichtung. Die Führung erlaubt es, die Sägeblattanordnungen innerhalb kürzester Zeit abwechselnd in Sägestellung zu bringen. Größere Feineinstellungen sind hierbei in der Regel überflüssig. Zusätzlich verfügt die Führung über entsprechende Arretiereneinrichtungen, die dafür sorgen, dass die Führung bei Erreichen der Sägestellung einer der Sägeblattanordnungen wenigstens kurzzeitig arretiert oder verrastet.

Jede Sägeblattanordnung umfasst bei dieser bevorzugten Variante wenigstens ein Sägeblatt, das z.B. eine jeweils unterschiedlicher Stärke, Radius oder oder/und Zahnung besitzt, so dass die Sägeeinheit flexibel für unterschiedliches Sägegut angepasst werden kann.

Vorzugsweise umfasst jede Sägeblattanordnung wenigstens zwei Sägeblätter mit unterschiedlichem Abstand zueinander. Dies ermöglicht das Einbringen unterschiedlicher Schnittmuster in das Sägegut bei Einsatz ein und derselben Sägeeinheit bzw. Sägeanordnung, nämlich lediglich durch Verschieben in Richtung der Sägeachse. Beispielsweise können die Sägeblattanordnungen Sägeblätter mit unterschiedlichem Abstand zueinander aufweisen, so dass unterschiedliche Brettstärken durch einfaches Hin- und Herschieben des Maschinengestells gesägt werden können.

Die Sägeanordnung kann im einfachsten Fall als einwellige Säge nur eine einzige im Wesentlichen orthogonal zur Vorschubrichtung verlaufende Sägeachse aufweisen. Auch dann erhält man wegen der vielfältigen Verstellmöglichkeiten bereits eine flexibel einsetzbare Sägeeinheit, die sowohl im Gleichlauf als auch im Gegenlauf arbeiten kann und darüber hinaus eine Vielzahl von Schnittmustern erzeugen kann, ohne dass bauliche Änderungen erforderlich werden.

Die Sägeanordnung kann als doppelwellige Säge auch zwei, in der Regel im Wesentlichen orthogonal zur Vorschubrichtung verlaufende, Sägeachsen umfassen, wobei die zweite Sägeachse eine Gegen-Sägeachse ist, der ein zweites Sägeblatt zugeordnet ist, das von von einer der einen Seite gegenüberliegenden Seite des Sägeguts her in dieses Sägegut eingreift. Das der einen Sägeachse zugeordnete Sägeblatt und das der zugeordneten Gegen-Sägeachse zugeordnete Sägeblatt können, bezogen auf die Vorschubrichtung des Sägegutes, an im Wesentlichen der gleichen Querposition angeordnet sein. Will man unterschiedlich große Sägeblätter verwenden, so kann beispielsweise daran gedacht werden, jeweils entsprechend vorgesehene Montagepositionen für wenigstens eine der Sägewellen vorzusehen, wobei jede Montageposition derart gewählt ist, dass ein auf die Größe des jeweiligen Sägeblattes abgestimmter Abstand zwischen den Sägewellen eingehalten ist. Alternativ kann auch für jede Sägewelle ein eigenes Maschinengestell vorgesehen sein, so dass der Abstand zwischen den Sägewellen durch Verlagern der Maschinengestelle entlang ihrer jeweiligen Führungsanordnungen eingestellt werden kann.

Die Flexibilität der Anordnung des Maschinengestells erlaubt es, das wenigstens eine Sägeblatt längs seiner zugeordneten Sägeachse feststehend anzubringen, ohne dass ein wesentlicher Teil der Flexibilität verloren geht.

Am Maschinengestell kann ein der wenigstens einen Sägeachse zugeordneter Antriebsmotor angebracht sein. Sofern mehrere Sägeachsen vorhanden sind, kann ggfs. jeder Sägeachse ein eigener Antriebsmotor zugeordnet und dementsprechend am Maschinengestell angebracht sein. Da das Maschinengestell nicht frei verlagert wird, sondern nur längs vorbestimmter Führungsrichtungen, beeinträchtigt das immer mehr zunehmende Gewicht eine ausreichend präzise Verstellung des Maschinengestells nicht allzu stark. Beispielsweise kann der Antriebsmotor auf der Oberseite des Maschinengestells angebracht sein. Bei einer Doppelwellen-Säge kann der Antriebsmotor auch die Sägewellen von zwei Sägeanordnungen antreiben, von denen jede eine Wesentlichen orthogonal zur Vorschubrichtung verlaufende Sägeachse aufweist. Er kann hierfür über ein geeignetes Getriebe, z.B. ein Riemengetriebe mit den jeweiligen Sägewellen gekoppelt sein.

In weiteren Ausgestaltungen kann die Sägemaschineneinheit als Fräsaggregat mit einer Werkzeuganordnung, die wenigstens einen Fräskopf, vorzugsweise einen Fräskopf oder zwei Fräsköpfe in Abstand voneinander, umfasst, ausgebildet sein. Sie kann auch als Seitenware-Abtrennaggregat, als Hobelaggregat mit wenigstens einer Hobelwelle oder als Seitenbearbeitungseinheit ausgebildet sein. Es sei angemerkt, dass die vorangehend mit Bezug auf eine Sägeeinheit dargestellten verschiedenen Varianten der Anordnung der Werkzeugeinheit und Verstellmöglichkeiten derselben sinngemäß auch in den anderen genannten Werkzeuganordnungen vorgesehen sein können.

Daneben kann die Werkzeuganordnung eine Transportvorrichtung aufweisen, die das Sägegut entlang der Vorschubbahn in der Vorschubrichtung transportiert oder/und quer zur Vorschubrichtung positioniert. Die Transportvorrichtung wird in der Regel wenigstens ein Paar von einander bezüglich der Vorschubrichtung gegenüberliegenden Rollen umfassen, die jeweils um eine parallele, orthogonal zur Vorschubrichtung verlaufende Achse drehbar sind. Häufig werden mehrere solcher Rollenpaare zu einer Rolleneinheit zusammengefasst sein. Jeder der Rollen eines Paares greift von einer gegenüberliegenden Seiten an dem Sägegut an und hält es damit in der durch die Angriffspunkte definierten Richtung quer zur Vorschubbahn, so dass eine Positionierung möglich ist.

Sofern die Transportvorrichtung wenigstens zwei Paare von Rollen bzw. zwei in Vorschubrichtung aufeinander folgende Rolleneinheiten umfasst, ist es günstig wenn die Achse der Rollen des einen Paares orthogonal zu der Achse der Rollen des anderen Paares ist, bzw. die Achsen der Rollen der einen Rolleneinheit orthogonal zu den Achsen der Rollen der anderen Rolleneinheit sind. Dann ist nämlich neben dem Transport des Sägegutes entlang der Vorschubbahn auch eine genaue Positionierung des Sägeguts in einer Ebene orthogonal zur Vorschubrichtung, z.B. bei horizontal verlaufender Vorschubbahn sowohl horizontal als auch vertikal, möglich. Die Erfindung bezieht sich gleichfalls auf eine Sägemaschine, umfassend einen fest auf einem Untergrund ruhenden Rahmen und wenigstens eine Sägemaschineneinheit der vorangehend beschriebenen Art,die an dem Rahmen verstellbar gehalten ist.

Die Erfindung wird im Folgenden anhand von Ausführungsbeispielen unter Bezugnahme auf die begleitenden Figuren näher erläutert. Es zeigen:
- Fig. 1:: eine Seitenansicht einer als Vertikalsägeeinheit ausgebildeten Form einer erfindungsgemäßen Sägemaschineneinheit, die an einem Rahmen einer Sägemaschine aufgehängt ist,
- Fig. 2A bis 2D:: verschiedene Ansichten einer weiteren als Horizontalsägeeinheit ausgebildeten Ausführungsform einer erfindungsgemäßen Sägemaschineneinheit, und
- Fig. 3:: eine Seitenansicht einer dritten als Transporteinheit ausgebildeten Ausführungsform einer erfindungsgemäßen Sägemaschineneinheit.

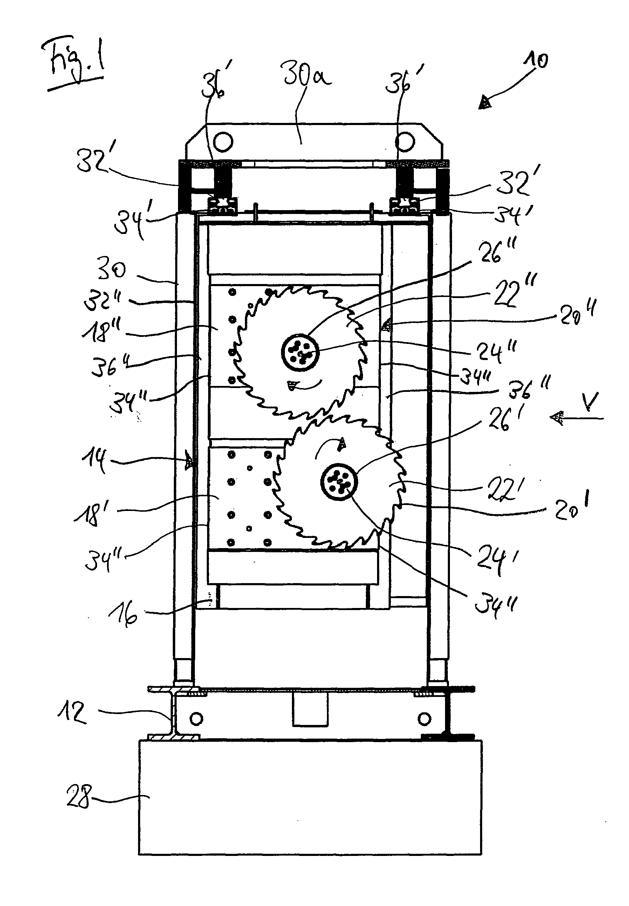

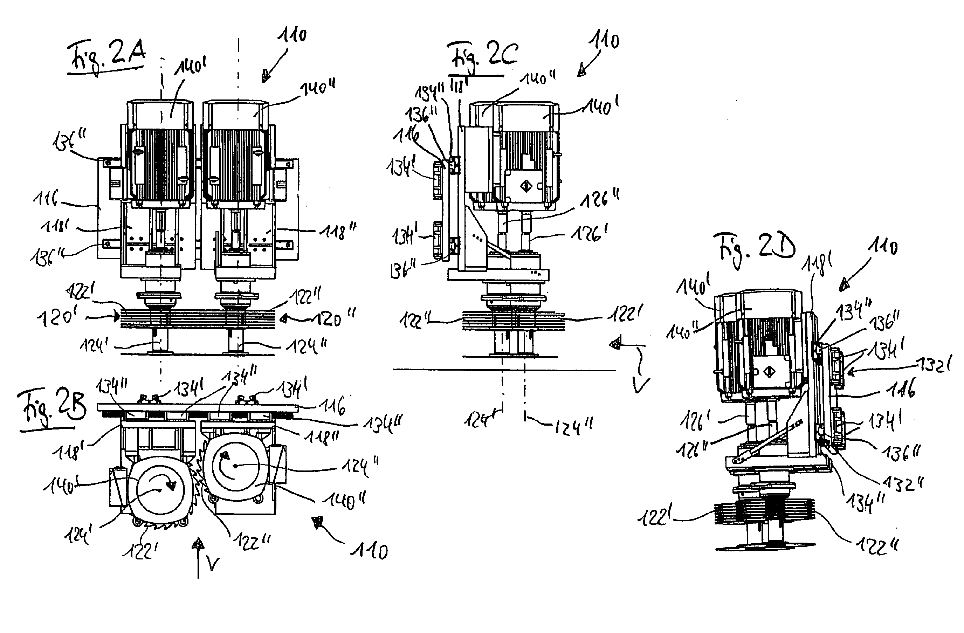

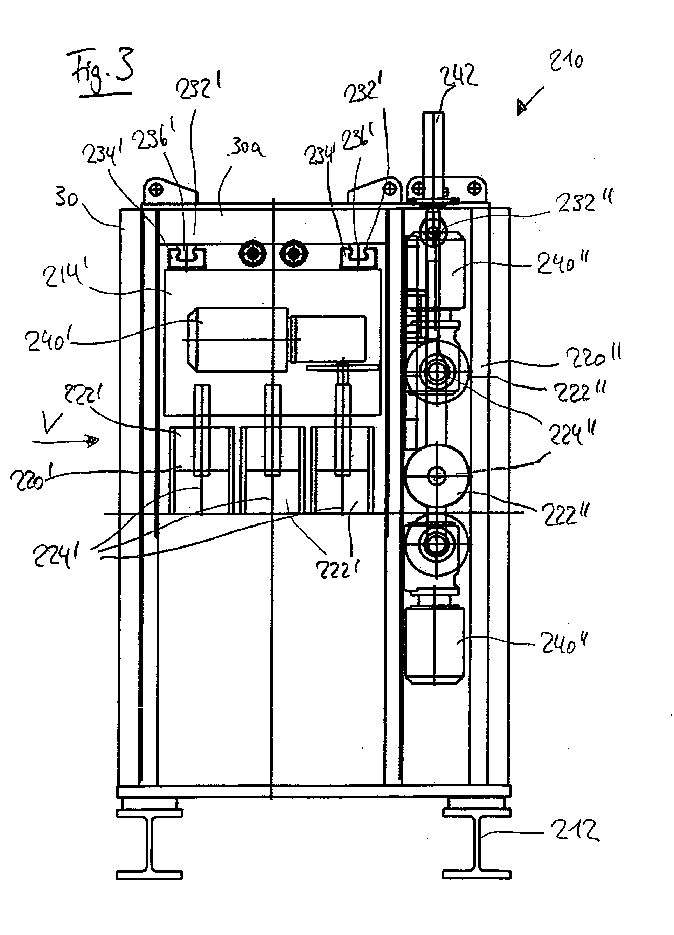

In Fig. 1 ist eine erste Ausführungsform einer als Sägeeinheit ausgebildeten erfindungsgemäßen Sägemaschineneinheit in Seitenansicht gezeigt und allgemein mit 10 bezeichnet. Die Sägeeinheit 10 ist Teil einer nicht dargestellten Sägemaschine, die entlang einer Vorschubbahn in im Wesentlichen horizontaler Vorschubrichtung (V) bewegtes Sägegut in aufeinander folgenden solcher Sägemaschineneinheiten verarbeitet. Auch die nachfolgend beschriebenen und in Fig. 2 und 3 gezeigten Sägemaschineneinheiten sind als Teile einer solchen Sägemaschine einsetzbar.

Die Sägeeinheit 10 umfasst ein Maschinengestell 14 und zwei Sägeanordnungen 20', 20", die an dem Maschinengestell 14 angebracht sind. Das Maschinengestell 14 umfasst ein Maschinengestell 16 (im Folgenden als zweites Maschinengestell bezeichnet), das an einem Rahmen 30 der Sägemaschine in Horizontalrichtung und orthogonal zur Verschubrichtung V verstellbar angebracht ist, sowie zwei Maschinengestelle 18' und 18" (im Folgenden als erste Maschinengestelle bezeichnet), die jeweils an dem ersten Maschinengestell 16 in Vertikalrichtung verstellbar angebracht sind. An jedem der zweiten Maschinengestelle 18', 18" ist eine jeweilige der Sägeanordnungen 20', 20" fest angebracht.

Das in Fig. 1 nicht eingezeichnete Sägegut wird in Vorschubrichtung V durch die Sägemaschine transportiert und der Sägeeinheit 10 von einer dieser vorangehend angeordneten Einzugsvorrichtung (die in Fig. 1 nicht eingezeichnet ist, aber z.B. der in Fig. 3 gezeigten Transporteinheit entsprechen kann) mit Rollen mit vertikaler Drehachse sowie mit Rollen mit horizontaler Drehachse (die in Fig. 3 angedeutet sind) zugeführt. Aus der Einzugsvorrichtung kommend, bewegt sich das Sägegut in Vorschubrichtung V längs seiner Vorschubbahn weiter und gelangt schließlich in einen Bereich, in dem ein in Fig. 1 unterhalb des Sägeguts angeordnetes erstes Kreissägeblatt 22' der ersten Sägeanordnung 20' sowie ein oberhalb des Sägegutes angeordnets zweites Kreissägeblatt 22" der zweiten Sägeanordnung 20" Einschnitte im Sägegut anbringen können. Jedes der Kreissägeblätter 22', 22" ist an einer jeweiligen quer (und zwar orthogonal) zur Vorschubrichtung V und im Wesentlichen in horizontaler Richtung verlaufenden Sägewelle 26', 26" angebracht und bildet somit im Sägegut parallel zur Vorschubrichtung V verlaufende Einschnitte. Die zentral die jeweilige Sägewelle 26', 26" durchsetzende Gerade definiert eine Sägeachse 24', 24", um die sich das jewilige Kreissägeblatt 22', 22" in Fig. 1 dreht.

Das durch einen nicht gezeigten Antriebsmotor angetriebene untere Kreissägeblatt 22' dreht sich im Uhrzeigersinn (siehe den entsprechenden Pfeil) um seine Sägeachse 24'. Es gelangt mit seiner Oberseite in Eingriff mit dem zu sägenden Sägegut und sägt dieses daher in einer Gegenlaufanordnung, in der die Bewegungsrichtung des in das Sägegut eingreifenden Abschnitts des Kreissägeblatts 22' gegensinnig zu der Vorschubrichtung V des Sägeguts ist.

Das durch einen ebenfalls nicht gezeigten Antriebsmotor angetriebene obere Kreissägeblatt 22" dreht sich ebenfalls im Uhrzeigersinn (siehe den entsprechenden Pfeil) um seine Sägeachse 24". Es gelangt mit seiner Unterseite in Eingriff mit dem zu sägenden Sägegut und sägt dieses daher in einer Gleichlaufanordnung, in der die Bewegungsrichtung des in das Sägegut eingreifenden Abschnitts des Kreissägeblatts 22' gleichsinnig zu der Vorschubrichtung V des Sägeguts ist.

Die Sägemaschine steht auf im Querschnitt z.B. Doppel-T-förmigen Fußteilen 12, die auf einem Untergrund 28 aufliegen. Auf den Fußteilen 12 liegt ein Rahmen 30 der Sägemaschine auf, an dem die Sägeeinheit 10, genauer deren zweites Maschinengestell 16 durch zwei Linearführungsanordnungen 32', 32' aufgehängt ist. Jede der Linearführungsanordnungen 32' umfasst einen am ersten Maschinengestell 16 angebrachten Schlitten 34', der in Horizontalrichtung orthogonal zur Vorschubrichtung V verschiebbar an einer horizontal und orthogonal zur Vorschubrichtung V verlaufenden Führungsschiene 36' gelagert ist, welche an einem Querholm 30a des Rahmens 30 vorgesehen ist. Die Schlitten 34' sind mit Abstand zueinander an dem zweiten Maschinengestell 16 angeordnet. Sie können darüber hinaus durch eine Arretiervorrichtung in einer gewünschten Stellung an der Linearführungsschiene 36' arretiert werden, was in Fig. 1 nicht im Detail dargestellt ist.

An dem zweiten Maschinengestell 16 sind zwei Führungsschienen 36", 36" einer zweiten Linearführungseinrichtung 32" angebracht, die jeweils an zwei einander gegenüber liegenden Seiten des zweiten Maschinengestells 16 in Vertikalrichtung verlaufen. An diesen Führungsschienen 36", 36" ist jeweils ein zu beiden Seiten der ersten Maschinengestelle 18', 18" ausgebildetes Schlittenelement 34" in Vertikalrichtung längs der Führungsschienen 36" beweglich geführt. Die Schlittenelemente 34" erstrecken sich dabei im Wesentlichen oberhalb der Ebene der jeweils zugeordneten Sägeachse 24', 24" oder allenfalls bis geringfügig unterhalb zu dieser Ebene. Damit sind alle Führungsanordnungen 32', 32" im Wesentlichen oberhalb der Ebene der Sägeanordnungen 20', 20" angeordnet, was den Vorteil hat, dass diese kaum durch beim Sägen herabfallende Sägespäne verschmutzt werden können.

In Fig. 2 werden für gleiche oder gleichwirkende Komponenten der Sägemaschineneinheit gleiche Bezugszeichen wie in Fig. 1 verwendet, jedoch erhöht um die Zahl 100. Zur Vermeidung von Wiederholungen werden im Folgenden jeweils nur die Unterschiede erläutert und wird auf ansonsten auf die vorstehenden Ausführungen zur Fig. 1 verwiesen.

Fig. 2A bis 2D zeigen in verschiedenen Ansichten eine weitere Ausführungsform der erfindungsgemäßen Sägemaschineneinheit in Form einer Horizontalsägeeinheit 110. Dabei zeigt Fig. 2A eine Ansicht der Horizontalsägeeinheit 110 in Vorschubrichtung V des Sägeguts, Fig. 2B zeigt eine Draufsicht auf die Horizontalsägeeinheit 110 aus einer Richtung orthogonal zur Vorschubrichtung V des Sägeguts, und Fig. 2C zeigt eine Seitenansicht der Horizontalsägeeinheit 110 in einer Richtung orthogonal zur Vorschubrichtung V des Sägeguts. Schließlich zeigt Fig. 2D eine Perspektivansicht der Horizontalsägeeinheit 110.

Die Horizontalsägeeinheit 110 ist als doppelwellige Säge mit zwei nebeneinander angeordneten Sägeanordnungen 120', 120" ausgebildet. Jede Sägeanordnung 120', 120" umfasst eine vertikal und orthogonal zur Vorschubrichtung V verlaufende Sägewelle, die längs einer jeweiligen Sägeachse 124'. 124" verläuft. An jeder Sägewelle ist eine jeweilige Gruppe von mehreren parallelen Kreissägenblättern 122', 122" angebracht. Die Kreissägenblätter jeder Gruppe von Kreissägenblättern 122', 122" sind horizontal ausgerichtet, und befinden sich jeweils in gleicher Höhe, so dass sie in das Sägegut jeweils von der, bezogen auf die Vorschubrichtung V, linken und rechten Seite her eindringend gemeinsame horizontale Schnittflächen einbringen. Die beiden Sägewellen 126', 126" sind hierbei beide im Uhrzeigersinn angetrieben (siehe die Pfeile in Fig. 2B), so dass die in Fig. 2B linken Kreissägenblätter 122' im Gegenlauf mit dem durch die Horizontalsägeeinheit 110 transportierten Sägegut arbeiten und die in Fig. 2B rechten Kreissägenblätter 122" im Gleichlauf mit dem durch die Horizontalsägeeinheit 110 transportierten Sägegut arbeiten. Jeder der beiden Sägewellen 126', 126" ist ein jeweiliger Antriebsmotor 140', 140" zugeordnet, der ebenfalls am Maschinengestell 114, genauer an der Oberseite des jeweiligen zweiten Maschinengestells 118', 118" befestigt ist. Die Motoren sind damit unabhängig voneinander zusammen mit den jeweils zugeordneten Sägeanordnungen 120', 120" verstellbar. Alternativ könnten beide Sägewellen 126', 126" durch einen gemeinsamen Antriebsmotor angetrieben sein.

Die Aufhängung und Führung des Maschinenengestells 114 der Horizontalsägeeinheit 110 an einem nicht gezeigten Rahmen der Sägemaschine erfolgt wie bei der Ausführungsform gemäß Fig. 1 dadurch, dass ein zweiter Maschinenrahmen 116 über Linearführungseinrichtungen 132' (jeweils gebildet durch an dem nicht gezeigten Rahmen der Sägemaschine angebrachte vertikale Führungsschienen 136' und an dem zweiten Maschinengestell 116 angebrachte Schlittenelemente 134') an dem Rahmen der Sägemaschine in Vertikalrichtung verstellbar aufgehängt ist und ein zwei erste Maschinengestelle 118', 118" über jeweilige Linearführungseinrichtungen 132" (jeweils gebildet durch an dem zweiten Maschinengestell 116 angebrachte horizontale Führungsschienen 136" und an dem jeweiligen ersten Maschinengestell 118" angebrachte Schlittenelemente 134") an dem zweiten Maschinengestell 116 horizontal verstellbar aufgehängt sind. An den ersten Maschinengestellen 118', 118" ist eine jeweilige der Sägeanordnungungen 120, 120' angebracht.

Wie Fig. 2A bis 2D zeigen, befinden sich sowohl die in Horizontalrichtung verlaufenden Führungseinrichtungen 132", 132" als auch die in Vertikalrichtung verlaufende Führungseinrichtung 132' der Horizontalsägeeinheit 110 im Wesentlichen oberhalb der Ebene der Sägeanordnungen 120'; 120", so dass die Führungseinrichtungen nicht durch beim Sägen entstehende Sägespäne verschmutzt werden.

Schließlich zeigt Fig. 3 eine Seitenansicht einer dritten als Transporteinheit 210 ausgebildeten Ausführungsform einer erfindungsgemäßen Sägemaschineneinheit. Auch in Fig. 3 werden für gleiche oder gleichwirkende Komponenten der Transporteinheit 210 gleiche Bezugszeichen wie in Fig. 1 verwendet, jedoch erhöht um die Zahl 200. Zur Vermeidung von Wiederholungen werden im Folgenden jeweils nur die Unterschiede erläutert und wird auf ansonsten auf die vorstehenden Ausführungen zur Fig. 1 bzw. Fig. 2 verwiesen.

Die Transporteinheit 210 dient zum Transport des Sägegutes in der Vorschubrichtung V und außerdem zur genauen Positionierung des Sägegutes quer zur Vorschubrichtung entlang der Vorschubbahn. Die Transporteinheit 210 kann beispielsweise als eine der Sägeeinheit 10 gemäß Fig.1 unmittelbar vorangehend angeordnete Einzugseinheit oder eine dieser unmittelbar nachfolgend angeordnete Auszugsvorrichtung ausgebildet sein, welche in der Sägeeinheit 10 getrenntes Sägegut aus der Sägeeinheit 10 heraus befördert und zur weiteren Verarbeitung zu nachfolgenden Sägemaschineneinheiten transportiert.

Bei der Transporteinheit gemäß Fig. 3 sind für den Transport und die genaue Positionierung des Sägegutes Transportrolleneinheiten 220' mit horizontaler Drehachse und Transportrolleneinheiten 220" mit vertikaler Drehachse vorgesehen (in Fig. 3 jeweils schematisch eingezeichnet). Die Transportrolleneinheit 220' mit vertikalen Drehachsen umfasst drei Paare von um vertikale Drehachsen 224' drehbaren Transportrollen, wobei die Rollen eines jeweiligen Paares auf gleicher Höhe angeordnet sind und einander bezüglich der Vorschubbahn gegenüber liegen. Die Transportrolleneinheit 220" mit horizontalen Drehachsen umfasst ein Paar von um horizontale Drehachsen 224" drehbaren Transportrollen, die vertikal übereinander angeordnet sind und einander bezüglich der Vorschubbahn ebenfalls gegenüber liegen. Die Transprotrollen greifen somit von gegenüber liegenden Seiten an dem Sägegut an und zentrieren dieses damit sowohl in horizontaler Richtung als auch in vertikaler Richtung auf der Vorschubbahn, während sie es weiter transportieren. Wenigstens eine der Transportrollen jeder der Transportrolleneinheiten 220', 220" wird von einem jeweiligen Antriebsmotor 240', 240" angetrieben. Der Antriebsmotor 240' der Transportrolleneinheit 240' mit vertikalen Drehachsen ist oberhalb der Vorschubbahn angeordnet. Bei der Transportrolleneinheit 220" mit horizontalen Drehachsen ist einer der beiden zugeordneten Antriebsmotoren 240" oberhalb der Vorschubbahn angeordnet.

Auch die Transportrolleneinheiten 220', 220", die ebenfalls Werkzeuganordnungen im Sinne der Erfindung bilden, sind durch jeweilige Linearführungseinrichtungen 232', 232" am Rahmen 30 der Sägemaschine quer zur Vorschubrichtung V verschiebbar gelagert. Die Transportrolleneinheit 220' ist hierzu durch am die Vorschubbahn überspannenden Querholm 30a des Rahmens 230 der Sägemaschine angebrachte horizontale Führungsschienen 236' und zugeordnete Schlittenelemente 234', die an einem Maschinengestell 214 angebracht sind, das auch die Transportrolleneinheit 220' trägt, in Horizontalrichtung orthogonal zur Vorschubrichtung verstellbar, so dass die gesamte Führungsanordnung 232' oberhalb der Vorschubbahn angeordnet ist. Demgegenüber ist die Transportrolleneinheit 220" durch am Rahmen 30 der Sägemaschine angebrachte vertikale Führungsschienen und zugeordnete Schlittenelemente, die an einem Maschinengestell angebracht sind, das auch die Transportrolleneinheit 220" trägt, in Vertikalrichtung verstellbar. Hierbei ist zumindest die Führung der oberen Transportrolle oberhalb der Vorschubbahn angeordnet. Hinsichtlich der unteren Transportrolle ist das zugeordnete Schlittenelement auf Höhe der Achse der Transportrolle angeordnet, so dass lediglich die vertikal verlaufende Führungsschiene weiter hinab reicht.

## Patentansprüche

1. Sägemaschineneinheit (10; 110; 210) für eine entlang einer Vorschubbahn in Vorschubrichtung (V) bewegtes Sägegut in aufeinander folgenden solcher Sägemaschineneinheiten verarbeitende Sägemaschine, wobei die Sägemaschineneinheit (10; 110; 210) wenigstens eine Werkzeuganordnung (20'; 20"; 120'; 120"; 220'; 220") umfasst, welche derart ausgebildet ist, dass sie an der Werkzeuganordnung (20'; 20"; 120'; 120"; 220'; 220") in der Vorschubrichtung (V) vorbei transportiertes Sägegut bearbeitet oder/und das Sägegut in der Vorschubrichtung (V) transportiert,
wobei die Werkzeuganordnung (20'; 20"; 120'; 120"; 220'; 220") im Betrieb der Sägemaschine in fester räumlicher Zuordnung zu dem Sägegut ist, und
wobei der Werkzeuganordnung (20'; 20"; 120'; 120"; 220'; 220") eine Führungsanordnung (32'; 32"; 132'; 132"; 232'; 232") zugeordnet ist, über welche die Werkzeuganordnung (20'; 20"; 120'; 120"; 220'; 220")an einem relativ zu einem Untergrund festen Rahmen (30) der Sägemaschine derart gehalten werden kann, dass die Werkzeuganordnung (20'; 20"; 120'; 120"; 220'; 220") in einem Nichtbetriebszustand der Sägemaschine relativ zu dem Rahmen (30) längs einer Führungsrichtung verstellbar ist,
**dadurch gekennzeichnet, dass**
die Führungsanordnung (32'; 32"; 132'; 132"; 232'; 232") im Wesentlichen oberhalb der Werkzeuganordnung (20'; 20"; 120'; 120"; 220'; 220") oder auf gleicher Höhe wie diese angeordnet ist.

2. Sägemaschineneinheit (10; 110; 210) nach Anspruch 1,
**dadurch gekennzeichnet, dass**
die Werkzeuganordnung (20'; 20"; 120'; 120"; 220'; 220") wenigstens eine Werkzeugachse (24'; 24"; 124'; 124"; 224'; 224") umfasst, deren
Lage im Betrieb der Sägemaschine (V) relativ zu der Vorschubbahn (V) des Sägegutes fest ist.

3. Sägemaschineneinheit (10;110; 210) nach Anspruch 2,
**dadurch gekennzeichnet, dass**
die Führungsanordnung (32'; 132"; 232') wenigstens zum Teil im Wesentlichen horizontal verläuft und der horizontal verlaufende Teil der Führungsanordnung (32', 132", 232') oberhalb der Werkzeuganordnung (20'; 120"; 220') oder auf gleicher Höhe wie diese angeordnet ist.

4. Sägemaschineneinheit (10; 110; 210) nach einem der Ansprüche 1 bis 3,
**gekennzeichnet durch**
ein erstes Maschinengestell (18'; 18"; 118'; 118"; 218'; 218"), an dem die Werkzeuganordnung (20'; 20"; 120'; 120"; 220'; 220") gehalten ist, wobei die Lage der Werkzeuganordnung (20'; 20"; 120'; 120"; 220'; 220") relativ zu dem ersten Maschinengestell (18'; 18"; 118'; 118"; 218'; 218") fest ist.

5. Sägemaschineneinheit nach einem der Ansprüche 1 bis 3,
**gekennzeichnet durch**
ein erstes Maschinengestell, an dem die Werkzeuganordnung gehalten ist, wobei die Werkzeuganordnung relativ zu dem ersten Maschinengestell **durch** eine erste Führungsanordnung längs einer ersten Führungsrichtung verstellbar ist.

6. Sägemaschineneinheit (10; 110; 210) nach Anspruch 4 oder 5,
**dadurch gekennzeichnet, dass**
das erste Maschinengestell (18'; 18"; 118'; 118"; 218'; 218") durch eine zweite Führungsanordnung (32"; 132'; 232'; 232") relativ zu dem Rahmen (30) der Sägemaschine längs einer zweiten Führungsrichtung verstellbar ist.

7. Sägemaschineneinheit (10; 110; 210) nach Anspruch 6,
**gekennzeichnet durch**
ein zweites Maschinengestell (16, 116), an dem das erste Maschinengestell (18'; 18"; 118'; 118") gehalten ist, wobei das zweite Maschinengestell (16; 116) relativ zu dem ersten Maschinengestell (18'; 18"; 118'; 118") **durch** eine zweite Führungsanordnung (32"; 132") längs einer zweiten Führungsrichtung linear verstellbar ist und wobei das zweite Maschinengestell (16; 116) relativ zu dem Rahmen (30) der Sägemaschine **durch** eine dritte Führungsanordnung (32'; 132') längs einer drittten Führungsrichtung verstellbar ist.

8. Sägemaschineneinheit (10; 110; 210) nach einem der vorangehenden Ansprüche,
**dadurch gekennzeichnet, dass**
die Führungsanordnung (32'; 32"; 132'; 132"; 232'; 232") als Linearführungsanordnung ausgebildet ist.

9. Sägemaschineneinheit (110) nach einem der vorangehenden Ansprüche,
**dadurch gekennzeichnet dass**
ein der Werkzeuganordnung (120'; 120") zugeordneter Antriebsmotor (140'; 140") auf der Oberseite des Rahmens (30) oder des Maschinengestells (116;118'; 118") angebracht ist.

10. Sägemaschineneinheit (210) nach einem der vorangehenden Ansprüche,
**gekennzeichnet durch**
eine mit der Werkzeuganordnung (220") oder/und dem Maschinengestell zum Verstellen längs der Führungsrichtung zusammenwirkende Stellvorrichtung (242).

11. Sägemaschineneinheit (210) nach Anspruch 10,
**dadurch gekennzeichnet, dass**
die Stellvorrichtung (242) als Linearantriebsvorrichtung ausgebildet ist.

12. Sägemaschineneinheit (10; 110; 210) nach einem der Ansprüche 2 bis 11,
**dadurch gekennzeichnet, dass**
die Werkzeugachse (24'; 24"; 124'; 124"; 224'; 224") quer zur Vorschubrichtung (V), vorzugsweise im Wesentlichen orthogonal zur Vorschubrichtung (V), verläuft.

13. Sägemaschineneinheit (10; 110; 210) nach Anspruch 12,
**dadurch gekennzeichnet, dass**
das die Werkzeuganordnung (20'; 20"; 120'; 120"; 220'; 220") in einer Richtung im Wesentlichen orthogonal zur Werkzeugachse (24'; 24"; 124'; 124"; 224'; 224") verschiebbar geführt ist.

14. Sägemaschineneinheit nach Anspruch 12 oder 13,
**dadurch gekennzeichnet, dass**
das die Werkzeuganordnung im Wesentlichen in Richtung der Sägeachse verschiebbar geführt ist.

15. Sägemaschineneinheit (210) nach einem der Ansprüche 1 bis 14,
**dadurch gekennzeichnet, dass**
die Werkzeuganordnung (220', 220") eine Transportvorrichtung (222'; 222") aufweist, die das Sägegut in der Vorschubrichtung (V) transportiert oder/und quer zur Vorschubrichtung positioniert.

16. Sägemaschineneinheit (210) nach Anspruch 15,
**dadurch gekennzeichnet, dass**
die Transportvorrichtung (222'; 222") wenigstens ein Paar von einander bezüglich der Vorschubrichtung gegenüberliegenden Rollen umfasst, die jeweils um eine parallele, orthogonal zur Vorschubrichtung verlaufende Achse (224', 224") drehbar sind.

17. Sägemaschineneinheit (210) nach Anspruch 16,
**dadurch gekennzeichnet, dass**
die Transportvorrichtung (220'; 220") wenigstens zwei Paare von Rollen umfasst, wobei die Achse der Rollen des einen Paares orthogonal zu der Achse der Rollen des anderen Paares ist.

18. Sägemaschine, umfassend einen fest auf einem Untergrund ruhenden Rahmen (30) und wenigstens eine Sägemaschineneinheit (10;110; 210) nach einem der vorangehenden Ansprüche, die an dem Rahmen (30) verstellbar gehalten ist.
